# EUROPEAN PATENT APPLICATION

(11) **EP 2 977 924 A1**
(43) Date of publication of application: **27.01.2016**
(21) Application number: 13878884.9
(22) Date of filing: 21.08.2013
(51) Int. Cl.: G06F 21/31, G06F 3/01, G06F 3/048, G06F 21/83, G06F 21/84

(54) **THREE-DIMENSIONAL UNLOCKING DEVICE, THREE-DIMENSIONAL UNLOCKING METHOD AND PROGRAM**

(30) Priority: 19.03.2013 JP 2013057185
(71) Applicant: NEC Solution Innovators, Ltd., Tokyo 136-8627 (JP)
(72) Inventor: MORISHITA Koji, Tokyo 136-8627 (JP); NAGAI Katsuyuki, Tokyo 136-8627 (JP); NODA Hisashi, Tokyo 136-8627 (JP)
(74) Representative: Vossius & Partner Patentanwälte Rechtsanwälte mbB
(86) International application number: PCT/JP2013/072244
(87) International publication number: WO 2014/147858

(57) **Abstract**

A three-dimensional unlocking device (100) includes: a virtual-data generating unit (101) that generates three-dimensional lock data representing plural virtual objects arbitrarily arranged in a three-dimensional coordinate space; a display processing unit (102) that causes a display unit to display the plural virtual objects; a position acquiring unit (103) that acquires a three-dimensional position of a specific region of an operator in the three-dimensional coordinate space; an operation detecting unit (104) that detects a selecting operation performed by the operator with the specific region to the virtual objects; a selection-information acquiring unit (105) that acquires selection information indicative of identification information corresponding to a selected virtual object and a selected order, on the basis of the detected selecting operation; and a lock controlling unit (106) that unlocks a lock by comparing the acquired selection information with selection information that has been already registered.

## Description

### TECHNICAL FIELD

The present invention relates to a technique concerning a three-dimensional user interface.

### BACKGROUND ART

A lock function is provided, for example, to mobile terminals such as smartphones and tablet-type terminals, or personal computers (PC) in order to prevent leakage of or unauthorized use of personal information. This lock function includes, for example, a screen lock function that disables screen operations, and a lock function that disables specific manipulations.

Mobile terminals with Android (registered trademark) have a screen lock function that unlocks a screen lock if a pre-registered trace pattern matches with a trace pattern obtained through tracing nine points organized in a 3×3 matrix.

Patent Document 1 described below proposes a method of making a user avoid tracing the same positions on the touch screen every time the user designates a lock pattern, thereby reducing a risk that a third party guesses the lock pattern from a trace of fingerprints remaining on the touch screen.

### RELATED DOCUMENT

### PATENT DOCUMENT

Patent Document 1: Japanese Patent Application Laid-open No. 2013-16115

### SUMMARY OF THE INVENTION

### PROBLEM TO BE SOLVED BY THE INVENTION

The method proposed above and a method employed in Android (registered trademark) are targeted at a two-dimensional user interface using a touch screen. On the other hand, in recent years, there has been an increased use of a user interface that detects three-dimensional motions of a user, for example, using a distance sensor such as KINECT (registered trademark), or a web camera, and controls a device according to motions detected. However, currently, there is no method that realizes the above-described lock function in the user interface dealing with the three-dimensional operation described above.

The present invention has been made in view of the circumstances described above, and provides a technique that unlocks a lock with a three-dimensional operation by an operator.

### MEANS FOR SOLVING THE PROBLEM

Each aspect of the present invention employs the following configuration to solve the problem described above.

A three-dimensional unlocking device according to a first aspect includes: a virtual-data generating unit that generates three-dimensional lock data representing plural virtual objects arbitrarily arranged in a three-dimensional coordinate space; a display processing unit that causes a display unit to display the plural virtual objects represented by the three-dimensional lock data; a position acquiring unit that acquires a three-dimensional position of a specific region of an operator in the three-dimensional coordinate space; an operation detecting unit that detects a selecting operation performed by the operator with the specific region to the virtual objects, using the three-dimensional position acquired by the position acquiring unit and three-dimensional positions of the plural virtual objects; a selection-information acquiring unit that acquires selection information indicative of identification information corresponding to a selected virtual object and a selected order on the basis of the selecting operation detected by the operation detecting unit; and a lock controlling unit that unlocks a lock by comparing the selection information acquired by the selection-information acquiring unit with selection information that has been already registered.

A three-dimensional unlocking method according to a second aspect is performed by at least one computer. The three-dimensional unlocking method according to the second aspect includes: generating three-dimensional lock data representing plural virtual objects arbitrarily arranged in a three-dimensional coordinate space; causing a display unit to display the plural virtual objects represented by the three-dimensional lock data; acquiring a three-dimensional position of a specific region of an operator in the three-dimensional coordinate space; detecting a selecting operation performed by the operator with the specific region to the virtual objects, using the acquired three-dimensional position and three-dimensional positions of the plural virtual objects; acquiring selection information indicative of identification information corresponding to a selected virtual object and a selected order, on the basis of the detected selecting operation; and unlocking a lock by comparing the acquired selection information with selection information that has been already registered.

It should be noted that another aspect of the present invention may include a program that causes at least one computer to perform the method according to the second aspect described above, and a computer-readable storage medium that records such a program. This storage medium includes a non-transitory tangible medium.

### EFFECT OF THE INVENTION

According to each of the aspects described above, it is possible to provide a technique of unlocking a lock with a three-dimensional operation performed by an operator.

### BRIEF DESCRIPTION OF THE DRAWINGS

The above-described object and other objects of the present invention, and features and advantages of the present invention will be made further clear by the preferred embodiment described below and the following drawings attached thereto.

FIG. 1 is a diagram schematically illustrating an example of a configuration of a three-dimensional unlocking device according to an exemplary embodiment of the present invention.
FIG. 2 is a diagram schematically illustrating an example of a hardware configuration of a three-dimensional user interface system according to a first exemplary embodiment.
FIG. 3 is a diagram illustrating an example of a usage mode of the three-dimensional user interface system according to the first exemplary embodiment.
FIG. 4 is a diagram illustrating an example of an outer structure of a head-mounted display (HMD).
FIG. 5 is a diagram schematically illustrating an example of a process configuration of a sensor-side device according to the first exemplary embodiment.
FIG. 6 is a diagram schematically illustrating an example of a process configuration of a display-side device according to the first exemplary embodiment.
FIG. 7 is a diagram illustrating an example of virtual objects represented by three-dimensional lock data generated in the first exemplary embodiment.
FIG. 8 is a diagram illustrating an example of a synthesized image displayed on a head-mounted display (HMD) in the first exemplary embodiment.
FIG. 9 is a sequence chart showing an example of operations performed by the three-dimensional user interface system according to the first exemplary embodiment.
FIG. 10A is a diagram illustrating an example of a synthesized image displayed on the head-mounted display (HMD) in a second exemplary embodiment.
FIG. 10B is a diagram illustrating an example of a synthesized image displayed on the head-mounted display (HMD) in the second exemplary embodiment.
FIG. 11 is a diagram schematically illustrating an example of a process configuration of a display-side device according to a modification example.
FIG. 12 is a diagram schematically illustrating an example of a hardware configuration of a three-dimensional user interface system according to a modification example.
FIG. 13 is a diagram schematically illustrating an example of a process configuration of a processing device according to a modification example.

### DESCRIPTION OF EMBODIMENTS

Hereinbelow, an exemplary embodiment according to the present invention will be described. Note that the exemplary embodiments described below are merely examples, and the present invention is not limited to the configurations of the exemplary embodiments described below.

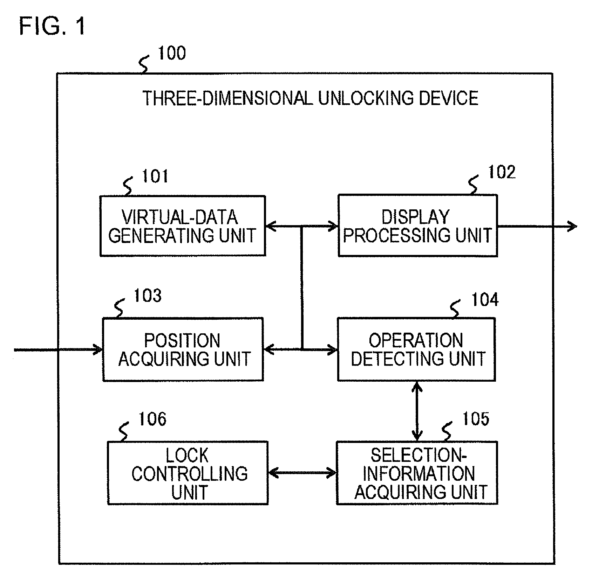

FIG. 1 is a diagram schematically illustrating an example of a configuration of a three-dimensional unlocking device 100 according to an exemplary embodiment of the present invention. As illustrated in FIG. 1, the three-dimensional unlocking device 100 includes: a virtual-data generating unit 101 that generates three-dimensional lock data representing plural virtual objects arbitrarily arranged in a three-dimensional coordinate space; a display processing unit 102 that causes a display unit to display the plural virtual objects represented by the three-dimensional lock data; a position acquiring unit 103 that acquires a three-dimensional position of a specific region of an operator in the three-dimensional coordinate space; an operation detecting unit 104 that detects a selecting operation performed by the operator with the specific region to the virtual objects, using the three-dimensional position acquired by the position acquiring unit 103 and three-dimensional positions of the plural virtual objects; a selection-information acquiring unit 105 that acquires selection information indicative of identification information corresponding to a selected virtual object and a selected order, on the basis of the selecting operation detected by the operation detecting unit 104; and a lock controlling unit 106 that unlocks a lock by comparing the selection information acquired by the selection-information acquiring unit 105 with selection information that has been already registered.

The three-dimensional unlocking device 100 illustrated in FIG. 1 has, for example, a similar hardware configuration to a three-dimensional user interface system 1 according to a detailed exemplary embodiment, which will be described later, and achieves each of the units described above with programs being processed in a similar manner to the three-dimensional user interface system 1. The display unit is connected with the three-dimensional unlocking device 100 in a communicable manner.

A three-dimensional unlocking method according to the present exemplary embodiment is performed by at least one computer such as the three-dimensional unlocking device 100 described above. The three-dimensional unlocking method includes: generating three-dimensional lock data representing plural virtual objects arbitrarily arranged in a three-dimensional coordinate space; causing a display unit to display the plural virtual objects represented by the three-dimensional lock data; acquiring a three-dimensional position of a specific region of an operator in the three-dimensional coordinate space; detecting a selecting operation performed by the operator with the specific region to the virtual objects, using the acquired three-dimensional position and three-dimensional positions of the plural virtual objects; acquiring selection information indicative of identification information corresponding to a selected virtual object and a selected order, on the basis of the detected selecting operation; and unlocking a lock by comparing the acquired selection information with selection information that has been already registered.

In this exemplary embodiment, three-dimensional lock data are generated, and plural virtual objects represented by the three-dimensional lock data are displayed. Furthermore, a three-dimensional position of a specific region of an operator is acquired in a three-dimensional coordinate space, which is the same as that used for the three-dimensional lock data. In addition, selecting operations performed by the operator with the specific region to the virtual objects are detected on the basis of each three-dimensional position of the plural virtual objects and the specific region of the operator. The specific region represents a part or whole of a body of the operator, and is used for pointing an operational position with a three-dimensional user interface. It is only necessary that the three-dimensional position of the specific region of the operator is acquired with a known method, and the method of acquiring the three-dimensional position is not limited in this exemplary embodiment.

1 In this exemplary embodiment, selection information is acquired on the basis of each of the selecting operations detected, and this selection information is compared with selection information that has been already registered, whereby a lock is unlocked. For example, the lock is unlocked if selected orders of the virtual objects indicated by the selection information are matched in the comparison between them. The selection information indicates a selected order of the virtual object and identification information corresponding to each of the selected virtual objects. It is only necessary that the identification information is information with which each of the virtual objects is identified, and the specific details thereof are not limited in this exemplary embodiment. Specific modes of the identification information will be described in detail in the detailed exemplary embodiments which will be described. The selection information that has been already registered may be kept in the three-dimensional unlocking device 100, or may be kept in other computers. Furthermore, the lock that is unlocked in this exemplary embodiment may be a screen lock, or may be a lock with other processing.

As described above, in this exemplary embodiment, judgment as to whether to unlock a lock is made on the basis of three-dimensional operations performed by the operator with the specific region to plural virtual objects arranged in the three-dimensional coordinate space. Thus, according to this exemplary embodiment, unlocking through the three-dimensional operations is achieved.

The exemplary embodiment described above will be described in more detail below. Below, description will be made of a first exemplary embodiment and a second exemplary embodiment as examples of detailed exemplary embodiments. Each of the detailed exemplary embodiments below is an example of a case where the three-dimensional unlocking device 100 and the three-dimensional unlocking method described above are applied to a three-dimensional user interface system. However, in each of the detailed exemplary embodiments below, only processing related to unlocking a lock will be described, and processing other than unlocking a lock will not be specifically described because it is only necessary that known techniques are applied to them.

### [First Exemplary Embodiment]

### [System Configuration]

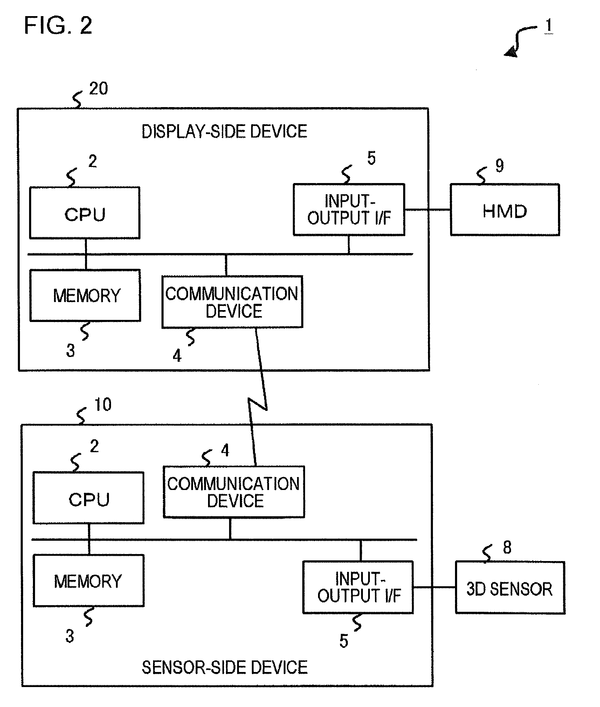

FIG. 2 is a diagram schematically illustrating an example of a hardware configuration of a three-dimensional user interface system 1 according to the first exemplary embodiment (hereinafter, simply referred to as a system). The system 1 according to the first exemplary embodiment includes a sensor-side configuration and a display-side configuration. The sensor-side configuration includes a three-dimensional sensor (hereinafter, referred to as a 3D sensor) 8 and a sensor-side device 10. The display-side configuration includes a head-mounted display (hereinafter, referred to as an HMD) 9 and a display-side device 20. Hereinafter, the terms "three-dimensional" and "two-dimensional" are referred to as a 3D and a 2D, respectively, in an abbreviated manner as appropriate.

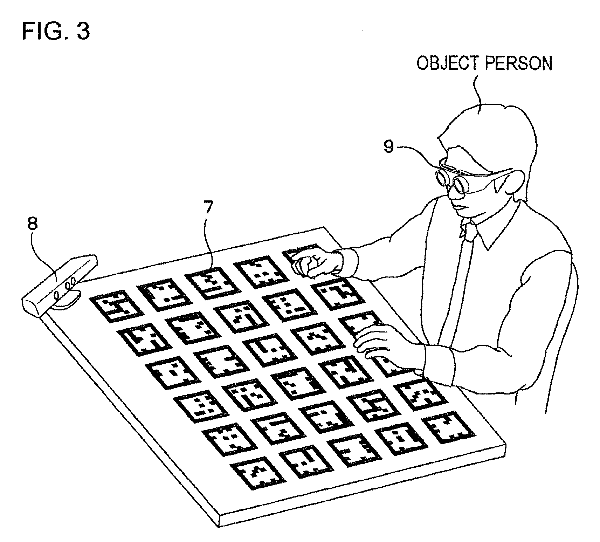

FIG. 3 is a diagram illustrating an example of how the system 1 according to the first exemplary embodiment is used. As illustrated in FIG. 3, the 3D sensor 8 is disposed at a position where a specific region of an operator (user) can be detected. The HMD 9 is worn on a head of the operator (user), captures a line-of-sight image from the operator, and displays the above-described plural virtual objects that are synthesized with the line-of-sight image. The operator views an image displayed on the display unit of the HMD 9 and performs selecting operations to the virtual objects contained in the displayed image to unlock a lock.

The 3D sensor 8 detects 3D information used, for example, for detecting a specific region of an operator. The 3D sensor 8 is realized, for example, with a visible-light camera and a range image sensor as with Kinect (registered trademark). The range image sensor is also called a depth sensor, in which a pattern with near-infrared light is emitted from a laser to an operator; the pattern is captured with a camera that can detect near-infrared light; and a distance (depth) from the range image sensor to the operator is calculated on the basis of information obtained through the capture. Note that the method of realizing the 3D sensor 8 itself is not limited, and the 3D sensor 8 may be realized with a three-dimensional scanner system using plural visible-light cameras. Furthermore, in FIG. 2, the 3D sensor 8 is illustrated as one element. However, the 3D sensor 8 may be realized with plural devices including, for example, a visible-light camera that captures a two-dimensional image of the operator and a sensor that detects the distance to the operator.

In this exemplary embodiment, as illustrated in FIG. 3, a three-dimensional coordinate space, which is common to the display-side configuration and the sensor-side configuration, is set with a marker 7 having a known shape. However, a common real object, which is provided for setting the common three-dimensional coordinate space, are not limited to the dedicated marker 7. The specific form of the common real object is not limited, provided that a certain reference point and three axes directions, which each extend from this certain reference point and intersect with each other at a right angle, can be constantly obtained from the common real object, regardless of the directions of sight. For example, the marker 7 can be replaced with an image or object disposed in a real world.

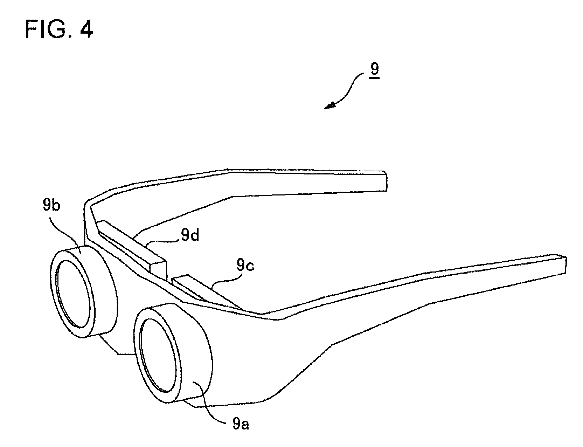

FIG. 4 is a diagram illustrating an example of an outer structure of the HMD 9. FIG. 4 illustrates a configuration of the HMD 9 called a video see-through type. In the example illustrated in FIG. 4, the HMD 9 includes two wearable cameras 9a and 9b, and two displays 9c and 9d. Each of the wearable cameras 9a and 9b captures a line-of-sight image corresponding to each line of sight of a user. The HMD 9 can be called an image capturing unit. Each of the displays 9c and 9d is disposed so as to surround the large part of a field of view of a user, and displays a synthesized 3D image in which a virtual 3D operation area is synthesized with each line-of-sight image. For this reason, each of the displays 9c and 9d may be called a display unit.

The sensor-side device 10 and the display-side device 20 each include, for example, a central processing unit (CPU) 2, a memory 3, a communication device 4, and an input-output interface (I/F) 5, each of which is connected to each other, for example, through a bus. The memory 3 includes, for example, a random access memory (RAM), a read only memory (ROM), a hard disk, and a portable storage medium.

The input-output I/F 5 of the sensor-side device 10 is connected with the 3D sensor 8, whereas the input-output I/F 5 of the display-side device 20 is connected with the HMD 9. Connection between the input-output I/F 5 and the 3D sensor 8 and connection between the input-output I/F 5 and the HMD 9 are established in a manner that they can wirelessly communicate with each other. Each of the communication devices 4 communicates with other device (for example, the sensor-side device 10 and the display-side device 20) in a wired or wireless manner. In this exemplary embodiment, a form of communication described above is not limited. Furthermore, the specific hardware configuration of each of the sensor-side device 10 and the display-side device 20 is not limited.

### [Process Configuration]

### [Sensor-side Device]

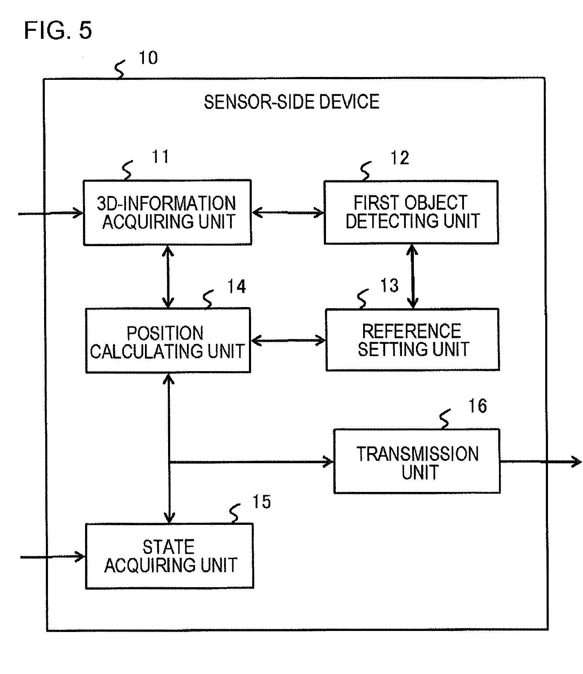

FIG. 5 is a diagram schematically illustrating an example of a process configuration of a sensor-side device 10 according to the first exemplary embodiment. The sensor-side device 10 according to the first exemplary embodiment includes, for example, a 3D-information acquiring unit 11, a first object detecting unit 12, a reference setting unit 13, a position calculating unit 14, a state acquiring unit 15, and a transmission unit 16. Each of these units is realized, for example, with the CPU 2 performing a program stored in the memory 3. Furthermore, this program may be installed, for example, from a portable storage medium such as a compact disc (CD) and a memory card or from another computer existing on a network through the input-output I/F 5, and may be stored in the memory 3.

The 3D-information acquiring unit 11 sequentially acquires 3D information detected by the 3D sensor 8. The 3D information includes a 2D image concerning an operator and obtained with visible light, and information on the distance (depth) from the 3D sensor 8. The 3D sensor 8 may be configured with plural units including, for example, a visible-light camera and a depth sensor.

The first object detecting unit 12 detects a known common real object on the basis of the 3D information acquired by the 3D-information acquiring unit 11. In this exemplary embodiment, the marker 7 illustrated in FIG. 3 is used as the common real object. The first object detecting unit 12 holds, in advance, information, for example, on the shape, the size, and the color that the marker 7 has, and detects the marker 7 on the basis of the 3D information using known information as described above.

The reference setting unit 13 sets a 3D coordinate space on the basis of the marker 7 detected by the first object detecting unit 12, and calculates the position and the direction of the 3D sensor 8 in this 3D coordinate space. For example, the reference setting unit 13 sets the 3D coordinate space in which the reference point extracted from the marker 7 is set as an original point, and three directions extending from this reference point and intersecting with each other at a right angle are set as individual axes. The reference setting unit 13 compares the known shape and size of the marker 7 with the shape and size of the marker 7 extracted from the 3D information, thereby calculating the position and the direction of the 3D sensor 8.

The position calculating unit 14 uses the 3D information sequentially acquired by the 3D-information acquiring unit 11 to sequentially calculate 3D positional information on a specific region of an operator in the 3D coordinate space. More specifically, in this exemplary embodiment, the position calculating unit 14 calculates the 3D positional information in the following manner. The position calculating unit 14 first extracts 3D positional information on a specific region of an operator on the basis of the 3D information acquired by the 3D-information acquiring unit 11. Here, the 3D positional information extracted corresponds to a camera coordinate system of the 3D sensor 8. Then, the position calculating unit 14 converts the 3D positional information corresponding to the camera coordinate system of the 3D sensor 8 into 3D positional information in the 3D coordinate space set by the reference setting unit 13, on the basis of the 3D coordinate space and the position and the direction of the 3D sensor 8 calculated by the reference setting unit 13. This conversion means conversion from the camera coordinate system of the 3D sensor 8 into the 3D coordinate system set on the basis of the marker 7.

Here, the number of specific regions of the operator to be detected may be two or more. For example, it may be possible to employ a form in which both hands of the operator are used as plural specific regions. In this case, the position calculating unit 14 extracts 3D positional information on each of the plural specific regions from the 3D information acquired by the 3D-information acquiring unit 11, and converts the extracted 3D positional information into 3D positional information in the 3D coordinate space. Furthermore, the specific region represents a part of a body of an operator used for performing operations, and hence, has a certain area or volume. Thus, the 3D positional information calculated by the position calculating unit 14 may be positional information on one point in the specific region, or may be positional information on plural points.

The state acquiring unit 15 acquires state information on the specific region of the operator. The state information on the specific region represents information with which a state concerning the shape of the specific region can be identified, and for example, indicates a state where fingers are closed, fingers are opened, and a thumb is raised. This specific region is the same as the specific region to be detected by the position calculating unit 14. In this exemplary embodiment, the number of states that this state information can indicate is not limited, provided that detection is possible. Furthermore, in the case where plural specific regions are used, the state acquiring unit 15 acquires state information for each of the plural specific regions.

The state acquiring unit 15 holds, in advance, image-characteristic information corresponding to a state of each of the specific regions to be recognized, and compares the image-characteristic information held in advance with characteristic information extracted from a 2D image contained in the 3D information acquired by the 3D-information acquiring unit 11, thereby acquiring state information on each of the specific regions. Furthermore, the state acquiring unit 15 may acquire the state information on the specific region on the basis of information obtained from a strain sensor (not illustrated) attached to the specific region. In addition, the state acquiring unit 15 may acquire the state information on the basis of information from an input mouse (not illustrated) operated by an operator with its hand. Moreover, the state acquiring unit 15 may acquire the state information by recognizing sound obtained with a microphone (not illustrated).

The transmission unit 16 transmits, to the display-side device 20, the 3D positional information on a specific region of an operator in the 3D coordinate space, which is calculated by the position calculating unit 14, and the state information on the specific region of the operator acquired by the state acquiring unit 15.

### [Display-side Device]

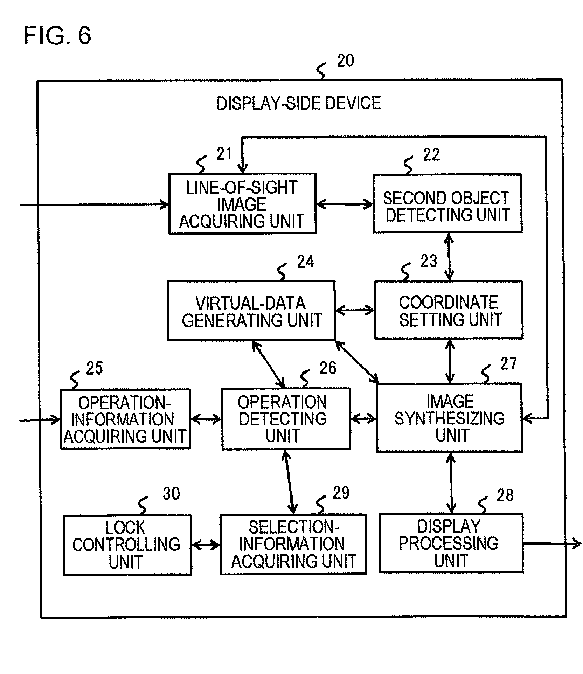

FIG. 6 is a diagram schematically illustrating an example of a process configuration of the display-side device 20 according to the first exemplary embodiment. The display-side device 20 according to the first exemplary embodiment includes, for example, a line-of-sight image acquiring unit 21, a second object detecting unit 22, a coordinate setting unit 23, a virtual-data generating unit 24, an operation-information acquiring unit 25, an operation detecting unit 26, an image synthesizing unit 27, a display processing unit 28, a selection-information acquiring unit 29, and a lock controlling unit 30. Each of these units is realized, for example, with the CPU 2 performing a program stored in the memory 3. Furthermore, this program may be installed, for example, from a portable storage medium such as a compact disc (CD) and a memory card or from another computer existing on a network through the input-output I/F 5, and may be stored in the memory 3.

The line-of-sight image acquiring unit 21 acquires a line-of-sight image from an operator. This line-of-sight image represents an image captured from a direction substantially equal to a direction in which operator's eye is directed. However, it may be possible that the line-of-sight image is not completely matched with an image that the operator views (sees). In the case where the operator performs a selecting operation to a virtual object, the line-of-sight image contains a specific region which is the same as the specific region of the operator detected by the sensor-side device 10. In this exemplary embodiment, since the wearable cameras 9a and 9b are provided, the line-of-sight image acquiring unit 21 acquires line-of-sight images corresponding to the left eye and the right eye. Note that each of the units similarly performs processing to both of the line-of-sight images corresponding to the left eye and the right eye, and hence, the explanation below will target at only one line-of-sight image.

The second object detecting unit 22 detects a known common real object that is the same as that detected by the sensor-side device 10, from the line-of-sight image acquired by the line-of-sight image acquiring unit 21. In other words, in this exemplary embodiment, the second object detecting unit 22 detects the marker 7 illustrated in FIG. 3. The second object detecting unit 22 performs its processing in a similar manner to the first object detecting unit 12 of the sensor-side device 10 described above, and hence, specific description thereof will not be repeated here. Note that the image-capturing direction differs between the marker 7 contained in the line-of-sight image and the marker 7 contained in the 3D information acquired by the 3D sensor 8.

The coordinate setting unit 23 sets a 3D coordinate space, which is the same as that set by the reference setting unit 13 of the sensor-side device 10, on the basis of the marker 7 detected by the second object detecting unit 22, and calculates the position and the direction of the HMD 9. The coordinate setting unit 23 also performs its processing in a similar manner to the reference setting unit 13 of the sensor-side device 10, and hence, specific description thereof will not be repeated here. The coordinate setting unit 23 also sets a 3D coordinate space on the basis of the common real object (marker 7), which is the same the common real object as the reference setting unit 13 of the sensor-side device 10 uses to set the 3D coordinate space. Consequently, the sensor-side device 10 and the display-side device 20 share this 3D coordinate space.

The virtual-data generating unit 24 generates 3D lock data representing plural virtual objects arbitrarily arranged in a 3D coordinate space set by the coordinate setting unit 23. In other words, the virtual-data generating unit 24 corresponds to the virtual-data generating unit 101 described above.

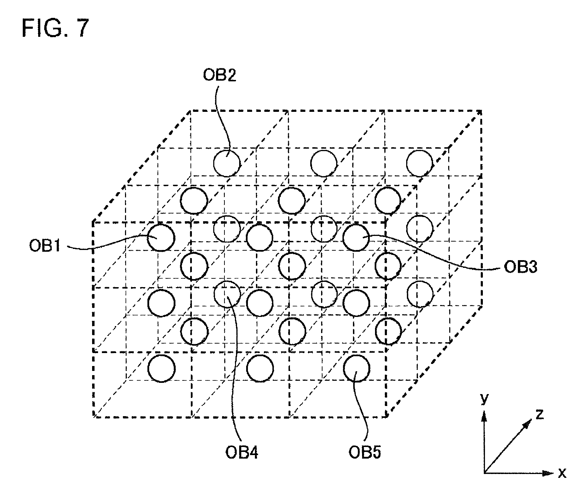

FIG. 7 is a diagram illustrating an example of the virtual objects represented by the 3D lock data generated in the first exemplary embodiment. Note that the dotted line is supplementally illustrated in FIG. 7 in order to make the arrangement of the virtual objects easily visible, and is not shown on the HMD 9. Furthermore, in FIG. 7, spherical virtual objects are shown. However, in the first exemplary embodiment, the number, the shape, the color, and the size of virtual objects are not limited. The virtual objects may be set so as to be translucent.

As illustrated in FIG. 7, in the first exemplary embodiment, the virtual-data generating unit 24 generates 3D lock data in which the plural virtual objects are arranged in predetermined positions with a grid pattern in the 3D coordinate space. In the example in FIG. 7, 27 pieces of virtual objects are arranged in a 3D coordinate space so that three virtual objects are disposed in each dimension in a cubic manner.

With the configuration described above, each of the virtual objects has information on a relative position in the arrangement with a grid pattern, in addition to information indicating the position in the 3D coordinate space. Hereinafter, in position information of the virtual objects, information on a position in the 3D coordinate space of positional information on each of the virtual objects is referred to as 3D positional information, and information on a relative position of each of the virtual objects in the arrangement with a grid pattern is referred to as relative-position information. In the example in FIG. 7, each of the virtual objects has the following relative-position information. The relative-position information is indicated as (x, y, z) according to the position in the "x" direction, the position in the "y" direction, and the position in the "z" direction.
Virtual object OB1: relative-position information (1, 3, 1)
Virtual object OB2: relative-position information (1, 3, 3)
Virtual object OB3: relative-position information (3, 3, 1)
Virtual object OB4: relative-position information (1, 1, 3)
Virtual object OB5: relative-position information (3, 1, 1)

The image synthesizing unit 27 synthesizes the virtual objects with the line-of-sight image acquired by the line-of-sight image acquiring unit 21 on the basis of the position of the HMD 9, the direction of the HMD 9, the 3D coordinate space, and the 3D lock data. At this time, the position of each of the virtual objects in the 3D coordinate space is determined using a visible space in the 3D coordinate space corresponding to a space shown on the line-of-sight image, as a display reference. Furthermore, in this exemplary embodiment, the image synthesizing unit 27 generates each synthesized image based on each line-of-sight image captured by the wearable cameras 9a and 9b. Note that it is only necessary that any know method, which is used, for example, in augmented reality (AR), is used for synthesizing-processing performed by the image synthesizing unit 27, and hence, detailed description thereof will not be made here.

The display processing unit 28 causes the HMD 9 to display the plural virtual objects as with the display processing unit 102 described above. In this exemplary embodiment, the display processing unit 28 causes the HMD 9 to display a synthesized image formed by virtual objects and a line-of-sight image. With this configuration, each synthesized image corresponding to each line of sight of an operator is displayed on each of the displays 9c and 9d, and hence, the operator can visually recognize the line-of-sight image and the virtual objects in a three-dimensional manner due to binocular parallax.

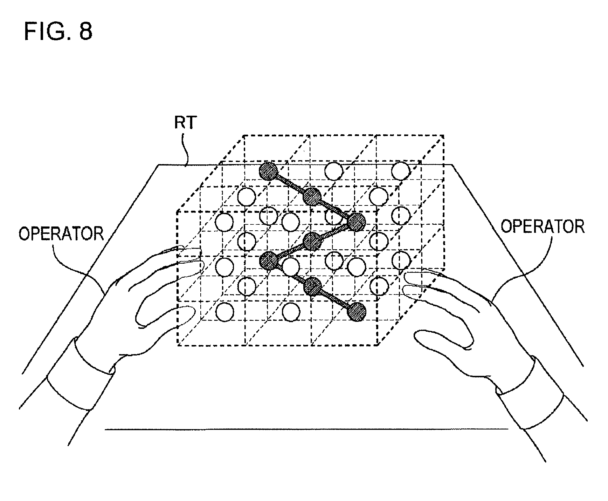

FIG. 8 is a diagram illustrating an example of a synthesized image displayed on the HMD 9. Note that the dotted line is supplementally illustrated in FIG. 8 to make the arrangement of the virtual objects easily visible, and is not shown on the HMD 9. The operator views the synthesized image formed by the line-of-sight image and the plural virtual objects as illustrated in FIG. 8 through the displays 9c and 9d. The synthesized image illustrated in FIG. 8 as an example contains a table RT existing in a real world and seen in the line-of-sight image, and nine virtual objects arranged in a grid pattern. As illustrated in FIG. 8, the display processing unit 28 may change colors of the selected virtual objects, whereby the trace of selection for a virtual object corresponding to the selected order is caused to be displayed.

The operation-information acquiring unit 25 receives, from the sensor-side device 10, the 3D positional information on a specific region of an operator in the 3D coordinate space, and state information on the specific region of the operator. In other words, the operation-information acquiring unit 25 corresponds to the position acquiring unit 103 described above.

The operation detecting unit 26 uses the 3D positional information on the specific region of the operator, the 3D positional information on the plural virtual objects, and the state information on the specific region of the operator to detect each selecting operation performed to the virtual objects by the operator with the specific region. For example, the operation detecting unit 26 recognizes an operation detecting area for each of the virtual objects, and detects that selecting operations are performed to the virtual objects in the case where the specific region of the operator comes into the operation detecting area and the state information thereon indicates a predetermined state (for example, a state where fingers are closed) . The operation detecting area is set, for example, to be a predetermined area in a manner such that the center of the area is the 3D position set for each of the virtual objects in the 3D coordinate space. The operation detecting area may be set so as to have a size equal to the size of the virtual object in the 3D coordinate space.

Furthermore, the operation detecting unit 26 may detect an operation for canceling a selection. For example, the operation detecting unit 26 may detect, on the basis of the state information, a change from a predetermined state (for example, a state where fingers are closed) corresponding to a selecting operation into another predetermined state (for example, a state where fingers are opened), as an operation for canceling a selection. Furthermore, the operation detecting unit 26 may detect movement of the specific region from an area having the plural virtual objects arranged therein to a position spaced apart by a predetermined distance, as an operation for canceling a selection.

The selection-information acquiring unit 29 acquires selection information as with the selection-information acquiring unit 105 described above. In this exemplary embodiment, the selection-information acquiring unit 29 acquires selection information indicating relative-position information on the selected virtual object and the selected order on the basis of the selecting operations detected by the operation detecting unit 26. However, positional information on the virtual object indicated by the selection information may be the 3D positional information described above. Until a cancellation of selection is detected, the selection-information acquiring unit 29 acquires, as selection information, the relative-position information on the virtual object and the selected order according to the detected order in selecting operations with the operation detecting unit 26. The cancellation of selection may be detected according to detection of an operation for canceling a selection by the operation detecting unit 26, or may be detected if a time from the first detection of a selecting operation with the operation detecting unit 26 elapses a predetermined period of time. Furthermore, the selection-information acquiring unit 29 may detect a cancellation of selection if the number of virtual objects selected reaches an upper limit value.

The lock controlling unit 30 unlocks a lock by comparing the selection information with selection information that has been already registered, as with the lock controlling unit 106 described above. For example, the lock controlling unit 30 unlocks a lock in the case where the selected order of each of the virtual objects indicated by this selection information matches with the selected order of each of the virtual objects indicated by the selection information that has been already registered. The selection information that has been already registered may be held by the display-side device 20, or may be held by another computer.

### [Example of Operation]

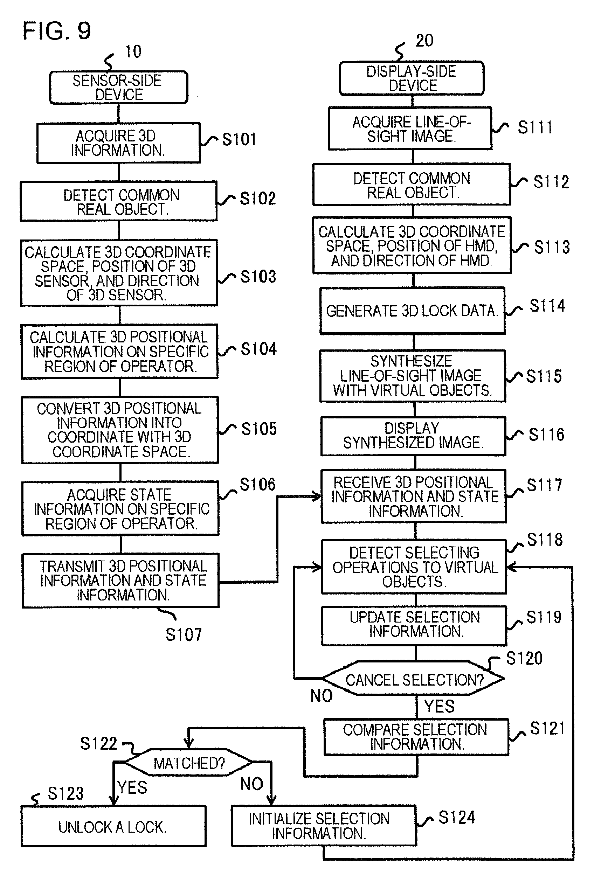

Next, a three-dimensional unlocking method according to the first exemplary embodiment will be described with reference to FIG. 9. FIG. 9 is a sequence chart showing an example of operations performed by the system 1 according to the first exemplary embodiment. Below, description will be made on the assumption that the sensor-side device 10 and the display-side device 20 perform each method. However, the subjects that perform each method may be at least one computer that constitutes the system 1.

The sensor-side device 10 sequentially acquires 3D information from the 3D sensor 8 (S101). The 3D information contains information on the marker 7 serving as common real objects, and a specific region of an operator. The sensor-side device 10 operates to the 3D information with a predetermined frame rate in the following manner.

The sensor-side device 10 detects common real object (marker 7) from the 3D information (S102). Next, the sensor-side device 10 sets a 3D coordinate space on the basis of the detected common real object, and calculates the position and the direction of the 3D sensor 8 in this 3D coordinate space (S103).

Then, the sensor-side device 10 uses this 3D information to calculate 3D positional information on the specific region of the operator (S104). Furthermore, the sensor-side device 10 converts the 3D positional information calculated in step S104 into 3D positional information in the 3D coordinate space set in step S103 on the basis of the position and the direction of the 3D sensor 8 calculated in step S103 and the 3D coordinate space (S105).

The sensor-side device 10 further acquires state information on the specific region of the operator (S106).

The sensor-side device 10 transmits, to the display-side device 20, the 3D positional information and the state information, each of which concerns the specific region of the operator (S107).

For the purpose of explanation, FIG. 9 shows an example in which step S102 and step S103 are performed at a predetermined frame rate of the 3D information. However, step S102 and step S103 may be performed only at a time of calibration. Furthermore, the timing of performing step S106 is not limited to that shown in FIG. 9.

On the other hand, the display-side device 20 sequentially acquires line-of-sight images from the HMD 9 (S111) without synchronization with the acquisition (S101) of the 3D information. The display-side device 20 operates to the line-of-sight images with a predetermined frame rate in the following manner.

The display-side device 20 detects common real object (marker 7), which is the same common real object as those detected by the sensor-side device 10 from the line-of-sight images (S112). Then, the display-side device 20 sets a 3D coordinate space on the basis of the detected common real object, and calculates the position and the direction of the HMD 9 in this 3D coordinate space (S113). Since the same marker 7 (common real object) is used, the sensor-side device 10 and the display-side device 20 share the 3D coordinate space.

The display-side device 20 generates the 3D lock data as described above (S114). This 3D lock data contains information such as the size, the shape, the display form, and the position of each of the plural virtual objects in the 3D coordinate space set in S113. The setting information on each of the virtual objects described above may be acquired through any methods.

The display-side device 20 synthesizes the line-of-sight image acquired in S111 with the plural virtual objects represented by the 3D lock data generated in S114 on the basis of the 3D coordinate space set in S113 (S115). The display-side device 20 causes the image obtained through the synthesis to be displayed on the HMD 9 (S116).

Upon receiving, from the sensor-side device 10, the 3D positional information and the state information, each of which concerns the specific region of the operator (S117), the display-side device 20 detects selecting operations performed by the operator with the specific region to the virtual objects, on the basis of the 3D position of the specific region of the operator and the 3D position of each of the virtual objects in the 3D coordinate space (S118). Through the detection of the selecting operations, the display-side device 20 acquires relative-position information on each of the selected virtual objects.

The display-side device 20 updates the selection information upon detection of the selecting operations in S118 (S119). More specifically, the display-side device 20 reflects the relative-position information on each of the virtual objects which is subjected to the selecting operation detected in S118, to the selection information in accordance with the order selected. The display-side device 20 repeats S118 and S119 until a cancellation of selection is detected (S120). With these operations, the relative-position information on each of the selected virtual objects and the order in which the selected virtual object is selected are accumulated in the selection information.

Upon detecting a cancellation of selection (YES in S120), the display-side device 20 checks the selection information updated in S119 against the selection information that has been already registered (S121). If the selected orders for the virtual objects are matched with each other (YES in S122), the display-side device 20 unlocks a lock (S123). On the other hand, if the selected orders for the virtual objects are not matched with each other (NO in S122), the display-side device 20 does not unlock a lock, and initializes the selection information (S124). After this, the display-side device 20 repeats step S118 and thereafter until the selected orders for the virtual objects are matched with each other (S122).

For the purpose of explanation, FIG. 9 shows an example in which S112 to S115 are performed at a predetermined frame rate for the line-of-sight images. However, it may be possible to employ a configuration in which S112 and S113 are performed only at a calibration, and S114 and S115 are performed at a timing when unlock is needed.

### [Operation and Effect of First Exemplary Embodiment]

As described above, in the first exemplary embodiment, the sensor-side device 10 and the display-side device 20 share the 3D coordinate space on the basis of the common real object (marker 7) shown on image information obtained from the HMD 9 and the 3D sensor 8. Furthermore, the line-of-sight images and the plural virtual objects for unlocking a lock are synthesized on the basis of this 3D coordinate space, and the synthesized image thus obtained is displayed on the HMD 9 mounted on the head portion of the operator. Moreover, in the first exemplary embodiment, a sensor (3D sensor 8) that can measure the position of a specific region of an operator is provided in addition to image capturing units (wearable camera 9a and wearable camera 9b) that obtain line-of-sight images. Then, positional relationships are compared between the specific region of the operator and virtual objects in the common 3D coordinate space, and selecting operations performed by the operator with the specific region to the virtual objects using the specific region are detected.

Furthermore, in the first exemplary embodiment, plural virtual objects, which are to be subjected to selecting operations, are displayed so as to be arranged in a grid pattern, and judgment as to whether to unlock a lock is made on the basis of information on a relative position of each of the virtual objects and the selected order of the virtual objects. As described above, according to the first exemplary embodiment, a function of unlocking a lock using a three-dimensional lock pattern is achieved, and in other words, a lock function with a three-dimensional user interface can be achieved.

Furthermore, the operator can visually recognize the plural virtual objects as if these virtual objects really exist in front of the operator itself, and can select the virtual objects with the specific region of the operator itself to unlock a lock. In other words, according to the first exemplary embodiment, the operator can perform operations for unlocking a lock with a direct operational feeling as if to directly touch the virtual objects. Furthermore, the virtual objects are only viewable by an operator, and hence, it is difficult for any third party to recognize a purpose of motion (gesture) of the operator with a specific region. In other words, according to the first exemplary embodiment, it is possible to prevent leakage to a third party of the selecting operations (gestures) performed by the operator using a specific region for unlocking a lock.

Furthermore, in the first exemplary embodiment, the selecting operations performed to the virtual objects are detected on the basis of the position and the state of the specific region of the operator. With this configuration, an operation (gesture) of holding a virtual object with a hand serving as the specific region is detected, whereby it is possible to give the operator more direct operational feelings. Furthermore, by setting a specific state of the specific region so as to correspond to the selecting operation, it is possible to prevent false detection of a selecting operation to the virtual object. For example, even if the specific region of an operator inadvertently touches the operation detecting area of a virtual object, it is possible to prevent this operation from being detected as the selecting operation to the virtual object. According to the first exemplary embodiment, due to the direct operational feeling as well as prevention of false detection as described above, it is possible to improve usability of a lock function with a three-dimensional user interface.

### [Second Exemplary Embodiment]

In a system 1 according to a second exemplary embodiment, judgment as to whether to unlock a lock is made on the basis of a sign set to each virtual object. Below, the system 1 according to the second exemplary embodiment will be described with focus being placed on things different from those in the first exemplary embodiment. In the following description, the details similar to those in the first exemplary embodiment will not be repeated.

### [Process Configuration]

In the second exemplary embodiment, the sensor-side device 10 and the display-side device 20 each have a process configuration similar to those in the first exemplary embodiment. Only the units that perform processing different from those in the first exemplary embodiment will be described below.

### [Display-side Device]

The virtual-data generating unit 24 generates three-dimensional lock data representing plural virtual objects each having a sign uniquely attached thereto and recognizable by an operator. The virtual-data generating unit 24 sets, for example, at least one item of color, number, letter, and symbol attached to each of the virtual objects as this sign, in a manner such that each of the virtual objects can be recognized. In the second exemplary embodiment, the virtual-data generating unit 24 can determine how the plural virtual objects are arranged in a 3D coordinate space in an arbitrary manner. Furthermore, in the second exemplary embodiment, the virtual-data generating unit 24 may change arrangement of the plural virtual objects at every predetermined timing. The predetermined timing may be, for example, every time the virtual objects are displayed, every time lock is placed, and may be determined in an arbitrary manner.

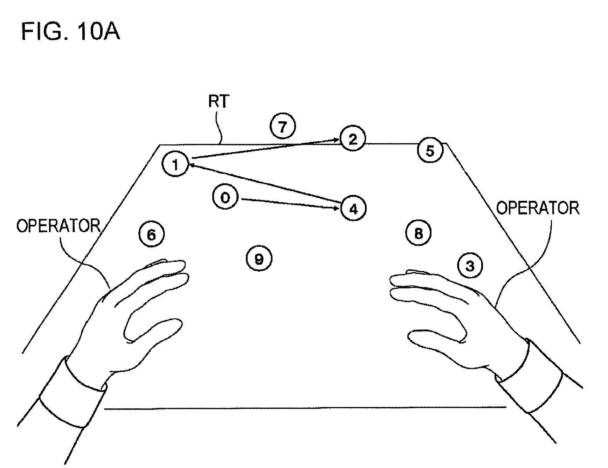

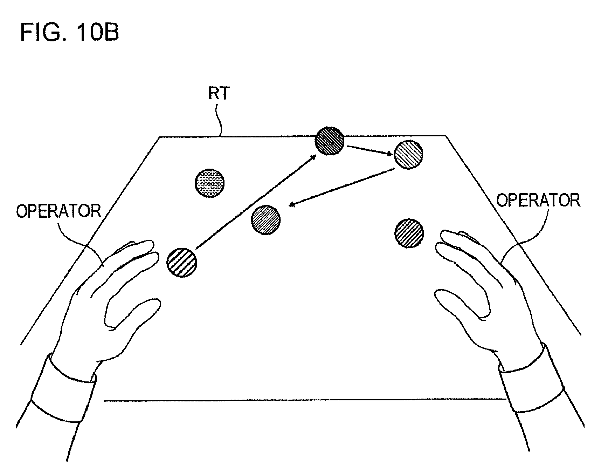

The display processing unit 28 causes the HMD 9 to display a synthesized image formed by the virtual objects and a line-of-sight image. FIG. 10A and FIG. 10B are diagrams each illustrating a synthesized image displayed on the HMD 9 in the second exemplary embodiment. In the example in FIG. 10A, numbers are uniquely set to the virtual objects as signs, and in the example in FIG. 10B, colors are uniquely set to the virtual objects as signs.

The selection-information acquiring unit 29 acquires selection information indicating a sign attached to a selected virtual object and the order selected. In the example in FIG. 10A, the selection-information acquiring unit 29 acquires selection information indicating the numbers set to the selected virtual objects and the selected orders of the virtual objects, and in the example in FIG. 10B, the selection-information acquiring unit 29 acquires selection information indicating the colors of and the selected orders of the virtual objects selected. As described above, according to the second exemplary embodiment, the selection information indicates a sign serving as identification information corresponding to each virtual object and the order selected.

### [Example of Operation]

A three-dimensional unlocking method according to the second exemplary embodiment is similar to that according to the first exemplary embodiment shown in FIG. 9 except that a sign is used as identification information corresponding to each virtual object. However, it may be possible that the display-side device 20 arbitrarily changes arrangement of virtual objects every time 3D lock data are generated in S114. S114 in FIG. 9 is performed again when relocking is released after a lock is unlocked (S123).

### [Operation and Effect of Second Exemplary Embodiment]

As described above, in the second exemplary embodiment, a sign, which is recognizable by an operator, is set for each of the virtual objects, and the plural virtual objects and a line-of-sight image are synthesized, whereby the resulting image is displayed on the HMD 9. With this configuration, the operator sequentially selects virtual objects according to the order of selection of signs set for virtual objects, which serves as selection information that has been already registered for unlocking a lock, thereby being able to unlock a lock. According to the second exemplary embodiment, the operator can remember a pattern for unlocking a lock using arrangement of signs set for virtual objects. Thus, the operator can easily remember it, whereby it is possible to achieve a user-friendly unlocking function.

Furthermore, in the second exemplary embodiment, the order of selection of the virtual objects is indicated with signs set for the virtual objects. Thus, it is possible to arbitrarily arrange the virtual objects, and furthermore, to change the arrangement of the virtual objects every time they are displayed. For the reasons described above, according to the second exemplary embodiment, it is possible to change movements (gestures) using a specific region of an operator for unlocking a lock every time, whereby it is possible to further prevent leakage to a third party of the selecting operations (gestures) performed by the operator using a specific region for unlocking a lock.

### [First Modification Example]

In the second exemplary embodiment described above, a sign is used as the identification information corresponding to each virtual object. However, at least one item of the shape and the size may be used as the identification information. In this case, the virtual-data generating unit 24 generates three-dimensional lock data representing plural virtual objects each having at least one item of the shape and the size uniquely set thereto in a recognizable manner to the operator. In this case, the operator sequentially selects virtual objects according to the order of selection of the at least one item of the shape and the size of each of the virtual objects for unlocking a lock, thereby being able to unlock a lock. Since each of the virtual objects can be identified on the basis of the shape and the size thereof, such a modification example can achieve the operation and effect similar to those of the second exemplary embodiment. Furthermore, it may be possible to synthesize two or more items of the sign employed in the second exemplary embodiment, the shape, and the size, and use them as the identification information.

### [Second Modification Example]

Furthermore, in the first exemplary embodiment and the second exemplary embodiment described above, selecting operations to virtual objects are detected on the basis of the 3D positional information and the state information concerning a specific region of an operator. However, it may be possible to employ a form in which the state information is not used. In this case, the state acquiring unit 15 of the sensor-side device 10 is not necessary, and the transmission unit 16 transmits only the 3D positional information on the specific region of the operator to the display-side device 20. Furthermore, in the display-side device 20, the operation detecting unit 26 does not use the state information, and detects selecting operations to the virtual objects on the basis of a 3D position of the specific region of the operator and 3D positions of plural virtual objects. For example, the operation detecting unit 26 detects a selecting operation to a virtual object if the specific region of the operator exists within an operation detecting area of the virtual object. In addition, the operation detecting unit 26 may detect a selecting operation to a virtual object in the case where the specific region of the operator stops within the operation detecting area of the virtual object for a predetermined period of time or longer.

Furthermore, the operation detecting unit 26 may detect a selecting operation to a virtual object in the following manner. For example, the operation detecting unit 26 may detect a specific operation only for the first selecting operation, and then, may detect subsequent selecting operations upon detecting an entry of the specific region into an operation detecting area of a virtual object, rather than detection of the specific operation, until selection is canceled. More specifically, the operation detecting unit 26 detects the first selection of a virtual object if the specific region stops within an operation detecting area of the virtual object for a predetermined period of time or longer, and detects a selection thereafter only by detecting an entry of the specific region into the operation detecting area. With this configuration, it is possible to simplify selecting operations to the virtual objects for unlocking a lock.

### [Third Modification Example]

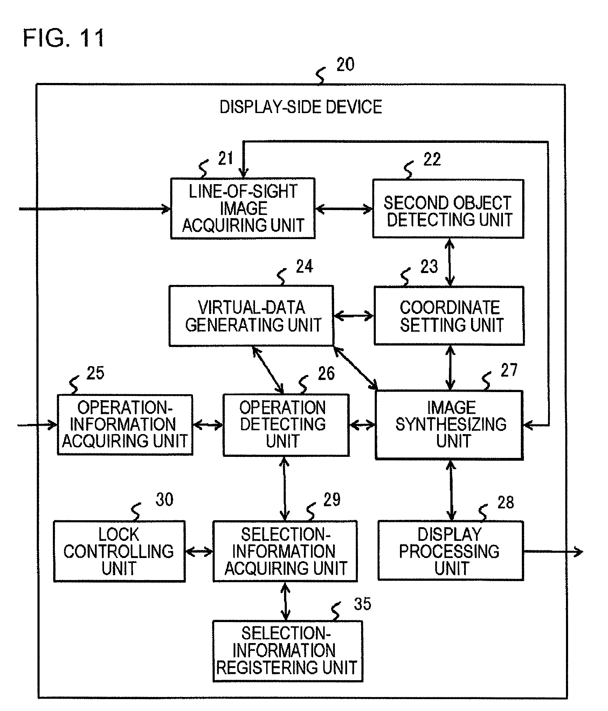

FIG. 11 is a diagram schematically illustrating an example of a process configuration of the display-side device 20 according to a modification example. The system 1 may have a function of registering selection information on a comparison target although description thereof has not particularly been made in each of the exemplary embodiments described above. In the modification example, as illustrated in FIG. 11, the display-side device 20 may further include a selection-information registering unit 35, in addition to the configuration in each of the exemplary embodiments described above. Processes performed by the display-side device 20 at the time of registering the selection information differ from those at the time of unlocking a lock. At the time of registering the selection information, the selection-information registering unit 35 registers the selection information acquired by the selection-information acquiring unit 29 into a storage unit as legitimate selection information. This storage unit may be provided in the display-side device 20, or may be provided in another computer.

Moreover, at the time of registering the selection information, the display processing unit 28 causes the HMD 9 to display a screen for an operator to select at least one item of positional information, sign, shape, and size serving as identification information corresponding to each virtual object. The operation detecting unit 26 detects an operation of selecting a form of identification information corresponding to a virtual object. The selection-information acquiring unit 29 causes the selection-information registering unit 35 to register a type of identification information selected by the operator and selection information containing identification information concerning this type in association with each other. With these operations, for example, the operator can select a mode that employs the relative-position information (corresponding to the first exemplary embodiment), and a mode that employs at least one item of sign, size, and shape (corresponding to the second exemplary embodiment and the modification examples). Furthermore, it may be possible to employ a configuration that causes the operator to select a desired sign from among signs including, for example, color, number, and symbol on the screen.

Furthermore, in the case where the mode that employs the relative-position information is selected, it may be possible to cause the operator to further select, on the screen, a pattern of arrangement of virtual objects in a grid pattern. In this case, it is only necessary for the virtual-data generating unit 24 to generate 3D lock data representing plural virtual objects arranged in a pattern selected by the operator. The arrangement pattern may take various forms, which include, for example, a cube described in the first exemplary embodiment as one example, a cuboid, a triangular pyramid, and a regular octahedron. In this case, information on the arrangement pattern of the virtual objects, together with legitimate selection information are registered. With this configuration, it is possible to change arrangement of the virtual objects or identification information according to operators, whereby it is possible to further prevent leakage of selecting operations performed by the operator using a specific region for unlocking a lock.

### [Other Modification Example]

In each of the exemplary embodiments described above, as illustrated in FIG. 3, the HMD 9 includes the wearable cameras 9a and 9b and the displays 9c and 9d that correspond to both eyes of an operator (user). However, the HMD 9 may include one wearable camera and one display. In this case, one display may be disposed so as to surround a field of view of one eye of an operator, or may be disposed so as to surround a field of view of both eyes of the operator. In this case, it is only necessary for the virtual-data generating unit 24 of the display-side device 20 to generate 3D lock data using a known 3D CG technology so that virtual objects are displayed in a 3D CG manner.

Furthermore, although the HMD 9 with a video see-through type is used in each of the exemplary embodiments described above to obtain a line-of-sight image, an optical see-through HMD 9 may be used. In this case, it is only necessary that the displays 9c and 9d with a half mirror are provided to the HMD 9, and virtual objects are displayed on the displays 9c and 9d. However, in this case, a camera for obtaining an image used for detecting common real objects in a direction of line of sight of the operator is disposed at a position where the camera does not block a view of the operator of the HMD 9.

Furthermore, in the first exemplary embodiment and the second exemplary embodiment described above, as illustrated in FIG. 2, the sensor-side device 10 and the display-side device 20 are separately provided, and the image observed from an object person is synthesized with virtual objects. However, it may be possible that a 2D image contained in the 3D information obtained by the sensor-side device 10 is synthesized with virtual objects, and the image thus obtained is displayed.

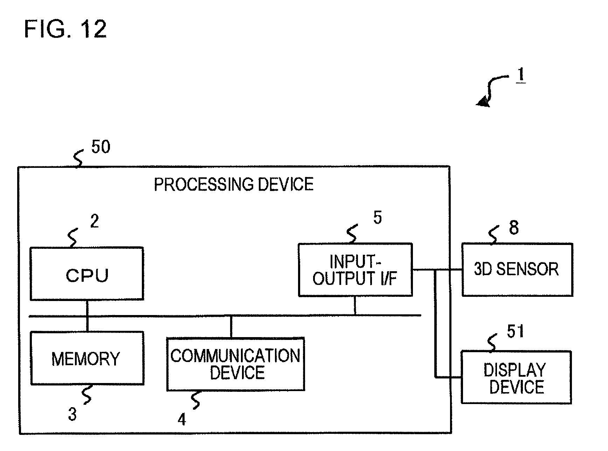

FIG. 12 is a diagram schematically illustrating an example of a hardware configuration of a system 1 according to a modification example. The system 1 includes a processing device 50, a 3D sensor 8, and a display device 51. The processing device 50 includes, for example, a CPU 2, a memory 3, and an input-output I/F 5. The input-output I/F 5 is connected to the 3D sensor 8 and the display device 51. The display device 51 displays a synthesized image.

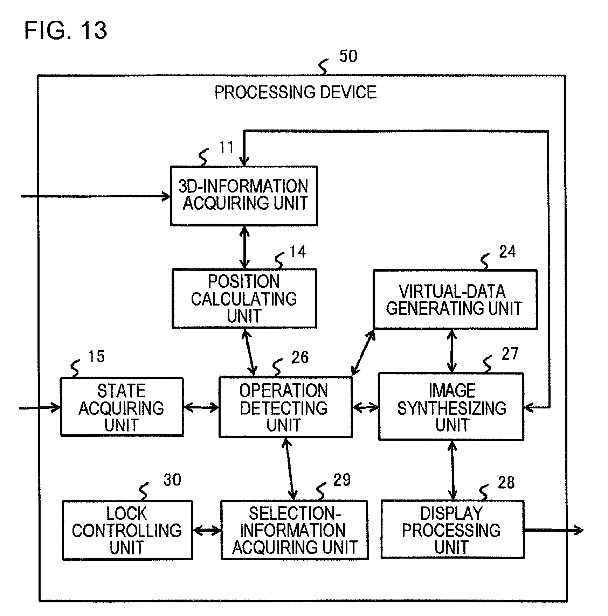

FIG. 13 is a diagram schematically illustrating an example of a process configuration of the processing device 50 according to a modification example. The processing device 50 according to the modification example includes the 3D-information acquiring unit 11, the position calculating unit 14, and the state acquiring unit 15, each of which is included in the sensor-side device 10 according to each of the exemplary embodiments described above, and further includes the virtual-data generating unit 24, the operation detecting unit 26, the image synthesizing unit 27, the display processing unit 28, the selection-information acquiring unit 29, and the lock controlling unit 30, each of which is included in the display-side device 20 according to each of the exemplary embodiments described above. These units are similar to those in each of the exemplary embodiments described above except for the following points.

The position calculating unit 14 obtains 3D positional information on a specific region of the object person directly from 3D information acquired from the 3D sensor 8 by the 3D-information acquiring unit 11. The operation detecting unit 26 detects selecting operations to virtual objects on the basis of the 3D positional information in a camera coordinate system calculated by the position calculating unit 14 and state information acquired by the state acquiring unit 15. The image synthesizing unit 27 synthesizes a 2D image contained in the 3D information acquired by the 3D-information acquiring unit 11 with virtual objects represented by 3D lock data generated by the virtual-data generating unit 24.

In this modification example, the object person operates virtual objects while viewing images of the object person itself captured from a direction (3D sensor 8) other than the direction of line of sight of the object person itself. Thus, in this modification example, direct operational feelings may deteriorate as compared with each of the exemplary embodiments described above that employ images observed from the object person itself. However, it is possible to unlock a lock through three-dimensional operations performed to the virtual objects using the specific region.

It should be noted that, in the flowchart used in the descriptions above, plural steps (processes) are described in a sequential order. However, the order of the steps performed in this exemplary embodiment is not limited to the order of the steps described. In this exemplary embodiment, the order of the steps illustrated in the drawing may be exchanged, provided that the exchange does not impair the details of the processes. Furthermore, the exemplary embodiments and modification examples described above may be synthesized as long as details thereof do not contradict each other.

The present application claims priority based on Japanese Patent Application No. 2013-057185 filed on March 19, 2013, the disclosures of which are incorporated herein by reference in their entirety.

## Claims

1. A three-dimensional unlocking device, comprising:
a virtual-data generating unit that generates three-dimensional lock data representing a plurality of virtual objects arbitrarily arranged in a three-dimensional coordinate space;
a display processing unit that causes a display unit to display the plurality of virtual objects represented by the three-dimensional lock data;
a position acquiring unit that acquires a three-dimensional position of a specific region of an operator in the three-dimensional coordinate space;
an operation detecting unit that detects a selecting operation performed by the operator with the specific region to the virtual objects, using the three-dimensional position acquired by the position acquiring unit and three-dimensional positions of the plurality of virtual objects;
a selection-information acquiring unit that acquires selection information indicative of identification information corresponding to a selected virtual object and a selected order, on the basis of the selecting operation detected by the operation detecting unit; and
a lock controlling unit that unlocks a lock by comparing the selection information acquired by the selection-information acquiring unit with selection information that has been already registered.

2. The three-dimensional unlocking device according to claim 1, wherein
the virtual-data generating unit generates the three-dimensional lock data in which the plurality of virtual objects are arranged in predetermined positions with a grid pattern in the three-dimensional coordinate space, and
the selection-information acquiring unit acquires the selection information indicative of positional information on the selected virtual object and the selected order.

3. The three-dimensional unlocking device according to claim 1, wherein
the virtual-data generating unit generates the three-dimensional lock data representing the plurality of virtual objects each having a sign uniquely attached thereto and recognizable by the operator, or representing the plurality of virtual objects each having a shape or size uniquely set thereto in a recognizable manner to the operator, and
the selection-information acquiring unit acquires the selection information indicative of a sign attached to the selected virtual object and the selected order, or the selection information indicative of a shape or size of the selected virtual object and the selected order.

4. The three-dimensional unlocking device according to claim 3, wherein
the virtual-data generating unit changes arrangement of the plurality of virtual objects at every predetermined timing.

5. The three-dimensional unlocking device according to any one of claim 1 to claim 4, further comprising:
a state acquiring unit that acquires state information on the specific region of the operator, wherein
the operation detecting unit detects a selecting operation performed by the operator with the specific region to the virtual object using the three-dimensional position acquired by the position acquiring unit, the three-dimensional positions of the plurality of virtual objects, and the state information acquired by the state acquiring unit.

6. The three-dimensional unlocking device according to any one of claim 1 to claim 5, further comprising:
a selection-information registering unit that registers selection information that is to be compared, in the lock controlling unit, with the selection information acquired by the selection-information acquiring unit, wherein
the display processing unit causes the display unit to display a screen for the operator to select at least one item of positional information, a sign, a shape, and a size, each of which is used as identification information corresponding to the virtual object, and
the selection-information acquiring unit causes the selection-information registering unit to register a type of the identification information selected by the operator and the selection information containing identification information related to the type in association with each other.

7. A three-dimensional unlocking method performed by at least one computer, including:
generating three-dimensional lock data representing a plurality of virtual objects arbitrarily arranged in a three-dimensional coordinate space;
causing a display unit to display the plurality of virtual objects represented by the three-dimensional lock data;
acquiring a three-dimensional position of a specific region of an operator in the three-dimensional coordinate space;
detecting a selecting operation performed by the operator with the specific region to the virtual objects, using the acquired three-dimensional position and three-dimensional positions of the plurality of virtual objects;
acquiring selection information indicative of identification information corresponding to a selected virtual object and a selected order, on the basis of the detected selecting operation; and
unlocking a lock by comparing the acquired selection information with selection information that has been already registered.

8. The three-dimensional unlocking method according to claim 7, wherein
said generation the three-dimensional lock data includes generating the three-dimensional lock data in which the plurality of virtual objects are arranged in predetermined positions with a grid pattern in the three-dimensional coordinate space, and
said acquiring the selection information includes acquiring the selection information indicative of positional information on the selected virtual object and the selected order.

9. The three-dimensional unlocking method according to claim 7, wherein
said generation the three-dimensional lock data includes generating the three-dimensional lock data representing the plurality of virtual objects each having a sign uniquely attached thereto and recognizable by the operator, or representing the plurality of virtual objects each having a shape or size uniquely set thereto in a recognizable manner to the operator, and
said acquiring the selection information includes acquiring the selection information indicative of a sign attached to the selected virtual object and the selected order, or the selection information indicative of a shape or size of the selected virtual object and the selected order.

10. The three-dimensional unlocking method according to claim 9, further including
changing arrangement of the plurality of virtual objects at every predetermined timing.

11. The three-dimensional unlocking method according to any one of claim 7 to claim 10, further including:
acquiring state information on the specific region of the operator, wherein
said detecting the selecting operation includes detecting a selecting operation performed by the operator with the specific region to the virtual object on the basis of the three-dimensional position acquired, the three-dimensional positions of the plurality of virtual objects, and the state information acquired.

12. The three-dimensional unlocking method according to any one of claim 7 to claim 11, further including:
causing the display unit to display a screen for the operator to select at least one item of positional information, a sign, a shape, and a size, each of which is used as identification information corresponding to the virtual object; and
registering a type of the identification information selected by the operator and the selection information containing identification information related to this type in association with each other.

13. A program that causes at least one computer to perform the three-dimensional unlocking method according to any one of claim 7 to claim 12.
